(19) **Europäisches Patentamt / European Patent Office / Office européen des brevets**

(11) **EP 4 675 941 A1**

(12) **EUROPEAN PATENT APPLICATION**
published in accordance with Art. 153(4) EPC

(43) Date of publication:
07.01.2026 Bulletin 2026/02

(21) Application number: 24919461.4

(22) Date of filing: 07.03.2024

(51) International Patent Classification (IPC):
*H04B 10/293* (2013.01)

(86) International application number:
PCT/CN2024/080457

(87) International publication number:
WO 2025/156370 (31.07.2025 Gazette 2025/31)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 24.01.2024 CN 202410097478

(71) Applicant: Accelink Technologies Co., Ltd.
Wuhan, Hubei 430000 (CN)

(72) Inventors:
• TIAN, Yuqin
Wuhan, Hubei 430000 (CN)
• ZHU, Feng
Wuhan, Hubei 430000 (CN)
• CHENG, Lijing
Wuhan, Hubei 430000 (CN)
• LI, Chao
Wuhan, Hubei 430000 (CN)
• ZHANG, Hao
Wuhan, Hubei 430000 (CN)
• ZHANG, Yazhou
Wuhan, Hubei 430000 (CN)
• FANG, Di
Wuhan, Hubei 430000 (CN)
• LEI, Rui
Wuhan, Hubei 430000 (CN)
• TAO, Jintao
Wuhan, Hubei 430000 (CN)
• FU, Chengpeng
Wuhan, Hubei 430000 (CN)

(74) Representative: Patentgruppen A/S
Aaboulevarden 31, 4th Floor
8000 Aarhus C (DK)

(54) **AUTOMATIC EDFA SIGNAL POWER CONTROL METHOD AND APPARATUS BASED ON REAL-TIME ASE COMPENSATION**

(57) The present invention provides a method and apparatus for automatic signal power control of an Erbium-Doped Optical fiber amplifier (EDFA) with real-time Amplified Spontaneous Emission (ASE) compensation. Target output signal power is set. When input optical power fluctuates, a real-time gain is derived based on the target output signal power and real-time input optical power. The corresponding ASE power is obtained using this real-time gain. The target output signal power and the ASE power are summed to yield desired total output power. By adjusting current real-time total output power to be this desired total output power, the output signal power within the real-time total output power is locked to the target output signal power while a magnitude of the current ASE power is compatible, thereby ensuring that the output signal power of an optical fiber amplifier remains unaffected by fluctuations in the input optical power.

FIG. 1

## Description

### CROSS-REFERENCE TO RELATED APPLICATIONS

This application claims priority to the following patent application:

(1) Chinese patent application with application number 202410097478.4, entitled "METHOD AND APPARATUS FOR AUTOMATIC SIGNAL POWER CONTROL IN EDFA WITH REAL-TIME ASE COMPENSATION", filed on Jan. 24, 2024 to the Chinese Patent Office.

### TECHNICAL FIELD

The present invention relates to the field of optical communication technologies, and particularly to a method and apparatus for automatic signal power control in EDFA with real-time ASE compensation.

### BACKGROUND

Erbium-Doped Optical fiber amplifiers (EDFAs) have greatly accelerated the development of optical communications. They offer advantages such as data format and rate transparency, high gain with low noise, elimination of the need for electrical regeneration repeaters, and a large gain bandwidth.

Based on application scenarios, EDFAs are mainly categorized into three types: Booster Amplifiers (BA), Pre-Amplifiers (PA), and In-Line Amplifiers (LA). BAs are deployed at the terminal end of optical transmitters, such as after optical wavelength division multiplexers, to boost the launched optical power. PAs are deployed at the front end of receivers to enhance receiver sensitivity. LAs are deployed in the middle of optical lines for relaying and amplifying optical power.

Control methods for EDFAs primarily include three types: Automatic Gain Control (AGC), Automatic Power Control (APC), and Automatic Current Control (ACC). The working principle of AGC mode involves detecting the input and output optical power and, combined with Amplified Spontaneous Emission (ASE) calibration parameters, calculating the current output signal gain, and then by comparing the deviation between the target gain and the current gain, adjusting the pump current to lock the target gain. The working principle of APC mode involves detecting the output optical power and comparing the deviation between the target output signal power and the real-time output power, and then adjusting the pump current to lock the output optical power. The working principle of ACC mode involves using a fixed current to drive the pump laser.

Among the three EDFA control methods, AGC mode serves as the primary operational mode. It amplifies the corresponding gain according to the attenuation of optical power in the fiber network, satisfying most application scenarios. APC, by limiting the total optical power, is mainly used to address laser safety issues, such as automatic power reduction when there is no input light. ACC mode is primarily used for debugging and verifying the optical path continuity and specifications of the EDFA module.

In optical network configuration, due to different noise figures and gain ranges among various types of EDFAs, and the characteristic that optical transceiver modules at the receiving end have an optimal power reception range, users need to configure the gain of amplifiers at all levels and the attenuation of VOAs in the optical network to achieve optimal Bit Error Rate (BER) performance. This imposes higher requirements on the optical network configuration scheme and customized EDFA modules. The AGC, APC, and ACC operating modes, starting from the basic functions of EDFAs, do not consider the need in optical networks to lock the output signal optical power. Dynamically adjusting the EDFA's gain to keep the output signal optical power consistently within the optimal power reception range of optical transceiver modules will effectively simplify optical network configuration schemes.

In the conventional technologies, to prevent the output optical power from varying synchronously due to fluctuations in the input optical power, the common approach is to directly lock the output optical power. However, solely locking the total output optical power presents a problem: while the magnitude of the total output power is locked, the ASE power can still change during this process. This forces the output signal power to change synchronously with the ASE variations, adversely affecting the signal quality of the output signal power.

In view of this, overcoming the deficiencies of this prior art is an urgent problem to be solved in this technical field.

### SUMMARY

The technical problem to be solved by the present invention is how to prevent the output signal power from being affected while input optical power fluctuates.

In the first aspect, there is provided a method for automatic signal power control of an EDFA with real-time ASE compensation, comprising: setting target output signal power; upon occurrence of input optical power fluctuation, obtaining a real-time gain based on the target output signal power and real-time input optical power; obtaining real-time ASE power based on said real-time gain, and obtaining current desired total output power based on said target output signal power and said real-time ASE power; acquiring real-time total output power, comparing said real-time total output power with said desired total output power to determine an output deviation, and compensating said real-time total output power based on said output deviation to ensure said real-time total output power resides within a preset acceptable power range.

In some embodiments, said upon occurrence of input optical power fluctuation, obtaining a real-time gain based on the target output signal power and real-time input optical power, specifically comprises: assigning a difference between gains of two input optical signals within a preset time interval as a gain deviation; determining the occurrence of input optical power fluctuation when said gain deviation exceeds a preset precision threshold; acquiring a difference between said target output signal power and said real-time input optical power, and constraining said difference between a maximum gain value and a minimum gain value corresponding to the optical fiber amplifier; assigning said difference as the real-time gain when said difference is less than or equal to the maximum gain value and simultaneously larger than or equal to the minimum gain value; assigning the maximum gain value as the real-time gain when said difference is larger than the maximum gain value; and assigning the minimum gain value as the real-time gain when said difference is less than the minimum gain value.

In some embodiments, the step of obtaining the real-time ASE power based on said real-time gain specifically comprises: obtaining the real-time ASE power based on the real-time gain and corresponding ASE calibration parameters using following equations:

$$ASE\_mw= ASE\_k * dB2mw(ASPC\_Gain) + ASE\_b;$$

$$dB2mw(ASPC\_Gain)= 10^{\wedge}(ASPC\_Gain/10);$$

where ASPC_Gain represents the real-time gain; ASE_mw represents the real-time ASE power corresponding to the real-time gain; ASE_k and ASE_b represent ASE calibration parameters; and dB2mw represents a function converting ASE power in dB units to mW units.

In some embodiments, the step of obtaining the current desired total output power based on said target output signal power and said real-time ASE power specifically comprises: converting a measuring unit of the ASE power and summing with the target output signal power to obtain the current desired total output power using following equations:

$$exp\_pwr\_mw= dB2mw(ASPC\_Set\_pwr) + ASE\_mw;$$

$$dB2mw(ASPC\_Set\_pwr)= 10^{\wedge}(ASPC\_Set\_pwr/10);$$

where exp_pwr_mw represents the desired total output power; ASPC_Set_pwr represents the target output signal power; and dB2mw represents the function converting ASE power in dB units to mW units.

In some embodiments, the step of acquiring real-time total output power, comparing said real-time total output power with said desired total output power to determine an output deviation, and compensating said real-time total output power based on said output deviation to ensure said real-time total output power resides within a preset acceptable power range, specifically comprises: acquiring the real-time total output power, converting a measuring unit of the real-time total output power, obtaining a difference between the converted real-time total output power and the desired total output power to yield the output deviation, and adjusting pump drive current based on said output deviation to change the current real-time total output power, so as to ensure that the current real-time total output power resizes in the preset acceptable power range, by using following equations:

$$pid\_delta= exp\_pwr\_mw - dB2mw(Output\_pwr);$$

$$dB2mw(Output\_pwr)= 10^{\wedge}(Output\_pwr/10);$$

where pid_delta represents the output deviation; output_pwr represents the real-time total output power; and dB2mw represents a function converting ASE power in dB units to mW units.

In some embodiments, the step of adjusting the pump drive current based on the output deviation comprises:

obtaining a variation range of the desired total output power; adjusting PID base parameters pid_p, pid_i and pid_d to enable a steady-state performance and dynamic performance of a current state to be optimal when the desired total output power is a maximum value; adjusting a power scaling factor ratio_p in the PID to enable the steady-state performance and dynamic performance of the current state to be optimal when the desired total output power is a minimum; and traversing the variation range of the desired total output power to confirm that the current PID parameters meet a requirement of the steady-state performance and dynamic performance.

In some embodiments, the method further comprises: acquiring a VOA base attenuation value and a VOA compensation attenuation value, and obtaining a VOA target attenuation amount by summing the VOA base attenuation value and the VOA compensation attenuation value; acquiring pre-VOA input optical power and post-VOA output optical power; obtaining a real-time attenuation value based on the pre-VOA input optical power and post-VOA output optical power; and adjusting a VOA digital-to-analog signal to ensure that said real-time attenuation value is said VOA target attenuation amount.

In some embodiments, the step of acquiring the VOA base attenuation value and the VOA compensation attenuation value and obtaining a VOA target attenuation amount by summing the VOA base attenuation value and the VOA compensation attenuation value, specifically comprises:

obtaining the VOA reference attenuation value based on the real-time gain and a maximum gain corresponding to a gain flattening filter, using following equation:

$$\text{voa\_base} = \text{Gain\_max} - \text{ASPC\_Gain};$$

where voa_base represents the VOA base attenuation value; Gain_max represent the maximum gain of the gain flattening filter; and ASPC_Gain represents the real-time gain;

obtaining the VOA compensation attenuation value based on a temperature condition of a module case, a gain condition of a current module and optical power of the current module, using following equation:

$$\text{voa\_comp} = K_1 * (\text{casetemp-casetemp\_thr}) + K_2 * (\text{gain}_{max} - \text{gain}_{set}) +$$
$$K_3 * \text{GTset} + K_4 * (\text{outputPwr}_{max} - \text{inputPwr}) + B;$$

where voa_comp represents the VOA compensation attenuation value; casetemp represents temperature of the module case; casetemp_thr represents a temperature threshold of the module case; gainmax represents a maximum set gain; gainset represents a set gain value; GTset represents a set gain tilt value; outputPwrmax represents maximum output optical power of the module; inputPwr represents the input optical power; and $K_1$-$K_4$, B each represent VOA attenuation compensation parameters;

obtaining the VOA target attenuation amount by summing the VOA reference attenuation value and the VOA compensation attenuation value using following equation:

$$\text{exp\_voa\_att} = \text{voa\_base} + \text{voa\_comp};$$

where exp_voa_att represents the VOA target attenuation amount.

In the second aspect, there is provided an apparatus for automatic signal power control in an EDFA with real-time ASE compensation, which is used to implement the method for automatic signal power control in an EDFA with real-time ASE compensation, wherein the apparatus comprises:

an input detection module, an output detection module, a real-time gain calculation module, an ASE calibration module, a desired total output power calculation module, a pump feedback module, and a pump drive module, wherein said input detection module, real-time gain calculation module, ASE calibration module, desired total output power calculation module, pump feedback module, and pump drive module are connected in sequence; said output detection module is connected to said pump feedback module;

wherein said input detection module is configured to acquire sampling data of current input optical power and provide said sampling data of the input optical power to said real-time gain calculation module; said real-time gain calculation module is configured to obtain a real-time gain based on said target output signal power and real-time input optical power; said ASE calibration module is configured to obtain real-time ASE power based on said real-time gain; said desired total output power calculation module is configured to obtain desired total output power based on said target output signal power and real-time ASE power; said output detection module is configured to acquire sampling data of the real-time total output power and provide said sampling data of the real-time total output power to said pump feedback module; said pump feedback module is configured to compare said real-time total output power with said desired total output power to determine an output deviation; and said pump drive module is configured to compensate said real-time total output power based on said output deviation, to ensure that the real-time total output power resizes in a preset acceptable power range.

In some embodiments, the apparatus further comprises: a VOA target attenuation calculation module, a VOA feedback control module, a VOA drive module, a VOA input detection module, and a VOA output detection module, wherein said VOA target attenuation calculation module is connected to said real-time gain calculation module; said VOA target attenuation calculation module, VOA feedback control module, and VOA drive module are connected in sequence; said VOA input detection module is connected to said VOA feedback control module; and said VOA output detection module is connected to said VOA feedback control module;
wherein said VOA target attenuation calculation module is configured to obtain a VOA base attenuation value and a VOA compensation attenuation value, and sum them to obtain a VOA target attenuation amount; said VOA input detection module is configured to acquire pre-VOA input optical power sampling data and provide said pre-VOA input optical power sampling data to said VOA feedback control module; said VOA output detection module is configured to acquire post-VOA output optical power sampling data and provide said post-VOA output optical power sampling data to said VOA feedback control module; said VOA feedback control module is configured to obtain a real-time attenuation value based on said pre-VOA input optical power and post-VOA output optical power, and implement closed-loop control to lock said real-time attenuation value to said VOA target attenuation amount; and said VOA drive module is configured to drive corresponding VOA components based on signals from said VOA feedback control module.

The present invention provides a method and apparatus for real-time ASE-compensated automatic signal power control in an EDFA. Target output signal power is set. When the input optical power fluctuates, a real-time gain is derived based on the target output signal power and the real-time input optical power. The ASE power corresponding to the real-time gain is then obtained. The target output signal power and the ASE power are summed to yield desired total output power. After adjusting the current real-time total output power to said desired total output power, the output signal power within the real-time total output power is locked to the target output signal power while the magnitude of the current ASE power is compatible, thereby ensuring the output signal power of the optical fiber amplifier is unaffected by fluctuations in the input optical power.

## BRIEF DESCRIPTION OF THE DRAWINGS

To describe the technical solutions in the embodiments of the present invention more clearly, the following briefly introduces the accompanying drawings required for describing the embodiments. Obviously, the accompanying drawings in the following description show merely some embodiments of the present invention, and a person of ordinary skill in the art may still derive other drawings from these accompanying drawings without creative efforts.

FIG. 1 is a flowchart of a method for automatic signal power control in an EDFA with real-time ASE compensation according to an embodiment of the present invention.
FIG. 2 is a flowchart of a method for obtaining the real-time gain within a method for automatic signal power control in an EDFA with real-time ASE compensation according to an embodiment of the present invention.
FIG. 3 is a flowchart of a method for obtaining the VOA target gain within a method for automatic signal power control in an EDFA with real-time ASE compensation according to an embodiment of the present invention.
FIG. 4 is a flowchart of a method for calibrating VOA attenuation compensation parameters within a method for automatic signal power control in an EDFA with real-time ASE compensation according to an embodiment of the present invention.
FIG. 5 is a schematic block diagram of an apparatus for automatic signal power control in an EDFA with real-time ASE compensation according to an embodiment of the present invention.
FIG. 6 is a schematic block diagram of another apparatus for automatic signal power control in an EDFA with real-time ASE compensation according to an embodiment of the present invention.

## DETAILED DESCRIPTION

The following clearly and completely describes the technical solutions in the embodiments of the present invention with reference to the accompanying drawings. It should be noted that the described embodiments are merely used to illustrate, but not to limit, the present invention.
In the description of the present invention, terms such as "inside," "outside," "longitudinal," "transverse," "upper," "lower," "top," "bottom," etc., indicating orientation or positional relationships are based on the orientation or positional relationships shown in the drawings. They are used solely to facilitate description of the invention and do not require the invention to be constructed or operated in a specific orientation. Therefore, they should not be construed as limiting the present invention.

Terms like "first," "second," etc., are used for descriptive purposes only and should not be interpreted as indicating or implying relative importance or implicitly specifying the quantity of the indicated technical feature. Thus, features modified with "first," "second," etc., may explicitly or implicitly include one or more of said features. In the description of the present invention, "a plurality" means two or more, unless otherwise specified.

In the present invention, unless otherwise expressly specified and limited, the term "connected" should be understood broadly. For example, "connected" can mean fixed connection, detachable connection, or integral connection; it can be direct connection or indirect connection through an intermediary. Additionally, the term "coupled" can refer to an electrical connection for signal transmission.

Moreover, technical features involved in the various embodiments of the present invention described below can be combined with each other as long as they do not conflict with each other.

## Embodiment 1

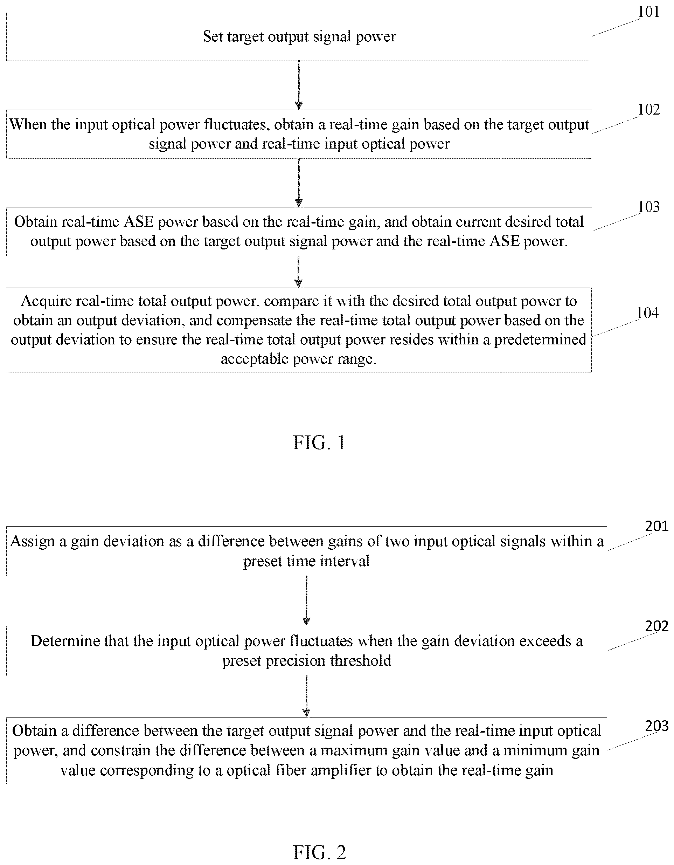

This embodiment of the present invention provides a real-time ASE-compensated automatic signal power control method for an EDFA. As shown in FIG. 1, the method flow includes:

Step 101, setting target output signal power.

The application scenario is that during the input and output of optical power in an optical amplifier, the output optical power includes ASE power and output signal power. The ASE power is a noise signal and is not required in this embodiment, while the output signal power is the key signal whose transmission quality needs to be guaranteed. However, during actual input and output in the optical amplifier, the input optical power may fluctuate, thereby affecting the final output optical power to change synchronously. In the prior art, to prevent the output optical power from changing synchronously, the common approach is to directly lock the output optical power. Simply locking the entire output optical power presents a problem that while the magnitude of the total output power is locked, the ASE power can still change during this process. This forces the output signal power to change synchronously with the ASE variations, adversely affecting the signal quality of the output signal power. Furthermore, for the corresponding optical transceiver modules, it is usually necessary to ensure the output signal power remains stable within the module's optimal power reception range. If the output signal power is affected and changes, it may fall outside this optimal range.

Therefore, in this embodiment, by locking the output signal power to the target output signal power (which can be set with reference to the optimal power reception range of the optical transceiver module), even if the input optical power fluctuates, the output signal power portion remains unaffected. The implementation is as follows:

Step 102: when the input optical power fluctuates, obtaining a real-time gain based on the target output signal power and real-time input optical power.

Step 103: obtaining real-time ASE power based on the real-time gain, and obtaining current desired total output power based on the target output signal power and the real-time ASE power.

Step 104: acquiring real-time total output power, comparing it with the desired total output power to obtain an output deviation, and compensating the real-time total output power based on the output deviation to ensure the real-time total output power resides within a predetermined acceptable power range.

In this embodiment, since the current real-time gain is determined, the corresponding ASE power can be obtained. Furthermore, since the output signal power needs to be fixed as the target output signal power, summing the target output signal power and the ASE power yields the desired total output power. By adjusting the current real-time total output power to this desired total output power, the output signal power within the real-time total output power is locked to the target output signal power while accommodating the current magnitude of the ASE power. This ensures the output signal power of the optical amplifier is unaffected by fluctuations in the input optical power, thereby enhancing the flexibility of the optical network and simplifying its configuration scheme.

In this embodiment, a method for judging whether the input optical power fluctuates and obtaining the real-time gain is as follows:

Obtaining the real-time gain when the input optical power fluctuates. As shown in FIG. 2, the flowchart includes:

Step 201: assigning a gain deviation as a difference between gains of two input optical signals within a preset time interval.

The preset time interval is set by those skilled in the art based on actual conditions. The gains of the two input optical signals within the preset interval are obtained by detecting the input optical signal twice within the preset time interval and calculating the corresponding gain for each detection.

Step 202: determining that the input optical power fluctuates when the gain deviation exceeds a preset precision threshold.

The preset precision threshold in this embodiment is set by those skilled in the art based on actual conditions. It should be noted that when the target output power is artificially adjusted, the input optical power will also appear to fluctuate. However, as this adjustment is a subjective human action, calculating the real-time gain at that moment is not meaningful.

Step 203: obtaining a difference between the target output signal power and the real-time input optical power, and constrain the difference between a maximum gain value and a minimum gain value corresponding to an optical fiber amplifier to obtain the real-time gain.

If the difference is less than or equal to the maximum gain value and larger than or equal to the minimum gain value, assign the difference as the real-time gain. If the difference is larger than the maximum gain value, assign the maximum gain value as the real-time gain. If the difference is less than the minimum gain value, assign the minimum gain value as the real-time gain.

The corresponding calculation equations are:

$$if(\nabla Aspc\_gain > adjust\_thr);$$

$$ASPC\_Gain = (ASPC\_Set\_pwr - Input\_pwr) \in [Gain\_min, Gain\_max];$$

where ASPC_Gain represents the real-time gain; a deviation between a currently calculated real-time gain and a previously calculated real-time gain as $\nabla Aspc\_gain$; ASPC_Set_pwr represents the target output signal power; Gain_min and Gain_max represent the minimum gain value and the maximum gain value of an EDFA module; and adjust_thr represents the preset precision threshold. The current real-time gain is updated when the gain deviation is larger than the preset precision threshold due to the occurrence of input optical power fluctuation, and the gain value is between the minimum gain value and the maximum gain value of the module. On the other hand, when the set target output signal power needs to be changed, the gain will also be changed, and the output optical power will eventually be changed. When the target output signal power changes, the gain deviation will also be changed. When the gain deviation is larger than the preset precision threshold, the current real-time gain is updated, and the gain value is between the minimum gain value and the maximum gain value of the module.

In this embodiment, an input detector is provided at the input end of the optical power, and is used for receiving and acquiring sampling data of the input optical power, and updating the sampling data of the input optical power in a first-in, first-out order, wherein the detected sampling data of the input optical power is used for calculating the real-time gain.

In this embodiment, after the real-time gain is obtained, the real-time ASE power in the current total output power can be obtained according to the real-time gain, as follows:

The real-time ASE power is obtained according to the real-time gain and the corresponding ASE calibration parameters using the corresponding equations as follows:

$$ASE\_mw = ASE\_k * dB2mw(ASPC\_Gain) + ASE\_b;$$

$$dB2mw(ASPC\_Gain) = 10^{\wedge}(ASPC\_Gain/10);$$

where ASPC_Gain represents the real-time gain; ASE_mw represents the real-time ASE power corresponding to the real-time gain; ASE_k and ASE_b represent ASE calibration parameters; and dB2mw represents a function converting ASE power in dB units to mW units.

The step of obtaining the current desired total output power based on said target output signal power and said real-time ASE power specifically comprises: converting a measuring unit of the ASE power and summing with the target output signal power to obtain the current desired total output power using following equations:

$$exp\_pwr\_mw = dB2mw(ASPC\_Set\_pwr) + ASE\_mw;$$

$$dB2mw(ASPC\_Set\_pwr) = 10^{\wedge}(ASPC\_Set\_pwr/10);$$

where exp_pwr_mw represents the desired total output power; ASPC_Set_pwr represents the target output signal power; and dB2mw represents the function converting ASE power in dB units to mW units.

After the desired total output power is obtained, the current real-time total output power is compared with the desired total output power, and the current real-time is adjusted to the desired total output power. Therefore, the present embodiment further involves the following design.

The step of acquiring real-time total output power, comparing said real-time total output power with said desired total output power to determine an output deviation, and compensating said real-time total output power based on said output deviation to ensure said real-time total output power resides within a preset acceptable power range, specifically comprises: acquiring the real-time total output power, converting a measuring unit of the real-time total output power, obtaining a difference between the converted real-time total output power and the desired total output power to yield the output deviation, and adjusting pump drive current based on said output deviation to change the current real-time total output power, so as to ensure that the current real-time total output power resizes in the preset acceptable power range, by using following equations:

$$\text{pid\_delta} = \text{exp\_pwr\_mw} - \text{dB2mw(Output\_pwr)};$$

$$\text{dB2mw(Output\_pwr)} = 10^{\wedge}(\text{Output\_pwr}/10);$$

where pid_delta represents the output deviation; output_pwr represents the real-time total output power; and dB2mw represents a function converting ASE power in dB units to mW units.

In this embodiment, according to the deviation between the set desired total output power and the real-time total output power, the original real-time total output power is locked to the desired total output power by adopting a PID closed-loop control mode, and the actual operation can be to increase or decrease the input optical power by driving the pump laser, and lock the final real-time total output power to the desired total output power, so as to adjust the signal gain of the erbium-doped fiber.

The pump drive current is adjusted according to the output deviation, thereby enhancing stability at the desired total output power, which includes:

obtaining a variation range of the desired total output power; adjusting PID base parameters pid_p, pid_i and pid_d to enable a steady-state performance and dynamic performance of a current state to be optimal when the desired total output power is a maximum value; adjusting a power scaling factor ratio_p in the PID to enable the steady-state performance and dynamic performance of the current state to be optimal when the desired total output power is a minimum; and traversing the variation range of the desired total output power to confirm that the current PID parameters meet a requirement of the steady-state performance and dynamic performance.

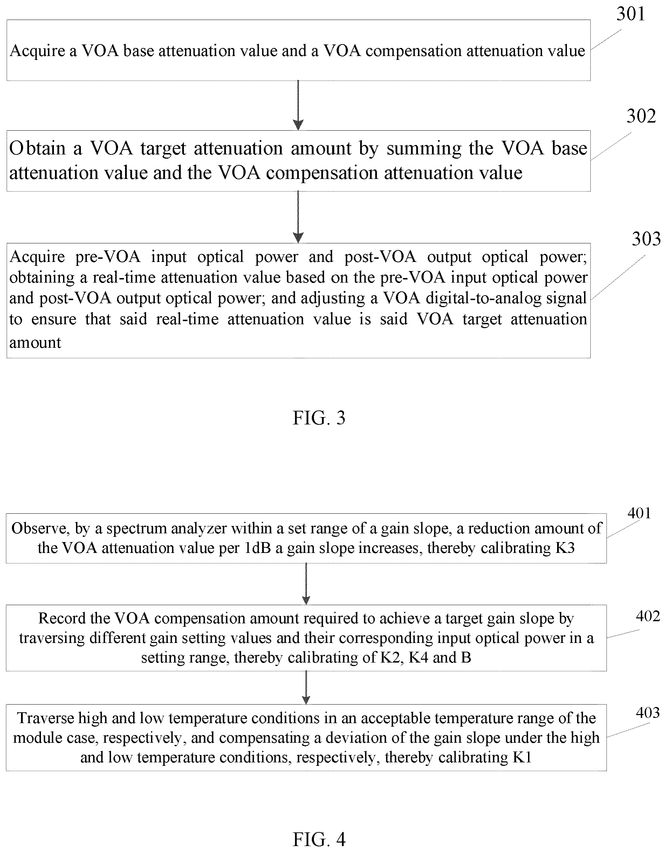

In this embodiment, considering that the quality of the wavelength in the optical communication system is also related to the corresponding gain slope of the optical fiber amplifier, when the gain slope of the optical fiber amplifier is in a flat state, the signal quality of the corresponding wavelength can be improved, and in this embodiment, the VOA attenuation amount of the gain value of the optical fiber amplifier can be compensated and adjusted to correspond to the state of adjusting the gain slope of the optical fiber amplifier. Therefore, the present embodiment further involves the following design, as shown in FIG. 3, the flowchart includes:

Step 301, acquiring a VOA base attenuation value and a VOA compensation attenuation value;
Step 302, obtaining a VOA target attenuation amount by summing the VOA base attenuation value and the VOA compensation attenuation value.
Step 303, acquiring pre-VOA input optical power and post-VOA output optical power; obtaining a real-time attenuation value based on the pre-VOA input optical power and post-VOA output optical power; and adjusting a VOA digital-to-analog signal to ensure that said real-time attenuation value is said VOA target attenuation amount.

After acquiring a target attenuation amount of a VOA, a real-time attenuation amount is adjusted to the target attenuation amount by adjusting a digital-to-analog conversion amount of the VOA. Specifically, when the real-time attenuation amount is smaller than the target attenuation amount, a DAC amount is increased to increase the attenuation amount if the VOA is a bright type, and the DAC amount is decreased to decrease the attenuation amount if the VOA is a dark type; and when the real-time attenuation amount is larger than the target attenuation amount, decreasing the DAC amount to increase the attenuation amount if the VOA is the bright type, and increasing the DAC amount to decrease the attenuation amount if the VOA is the dark type.

The step of acquiring a VOA base attenuation value and a VOA compensation attenuation value, and obtaining a VOA target attenuation amount by summing the VOA base attenuation value and the VOA compensation attenuation value, specifically comprises:

obtaining the VOA reference attenuation value based on the real-time gain and a maximum gain corresponding to a gain flattening filter, using following equation:

$$voa\_base = Gain\_max - ASPC\_Gain;$$

where voa_base represents the VOA base attenuation value; Gain_max represent the maximum gain of the gain flattening filter; and ASPC_Gain represents the real-time gain;

obtaining the VOA compensation attenuation value based on a temperature condition of a module case, a gain condition of a current module and optical power of the current module, using following equation:

$$voa\_comp = K_1*(casetemp-casetemp\_thr) + K_2*(gain_{max}-gain_{set}) +$$

$$K_3*GTset + K_4*(outputPwr_{max}-inputPwr) + B;$$

where voa_comp represents the VOA compensation attenuation value; casetemp represents temperature of the module case; casetemp_thr represents a temperature threshold of the module case; gainmax represents a maximum set gain; gainset represents a set gain value; GTset represents a set gain tilt value; outputPwrmax represents maximum output optical power of the module; inputPwr represents the input optical power; and $K_1$-$K_4$, B each represent VOA attenuation compensation parameters.

The maximum configured gain refers to the upper limit of the gain range of the optical amplifier itself. The configured gain value is the gain value set by the user, which must fall within the gain range of the optical amplifier.

Obtaining the VOA target attenuation amount by summing the VOA reference attenuation value and the VOA compensation attenuation value using following equation:

$$exp\_voa\_att = voa\_base + voa\_comp;$$

where exp_voa_att represents the VOA target attenuation amount.

In this embodiment, as shown in FIG. 4, a calibration method of the VOA attenuation compensation parameters comprises:

Step 401, observing, by a spectrum analyzer within a set range of a gain slope, a reduction amount of the VOA attenuation value per 1dB a gain slope increases, thereby calibrating K3;

Step 402, recording the VOA compensation amount required to achieve a target gain slope by traversing different gain setting values and their corresponding input optical power in a setting range, thereby calibrating of K2, K4 and B;

Step 403, traversing high and low temperature conditions in an acceptable temperature range of the module case, respectively, and compensating a deviation of the gain slope under the high and low temperature conditions, respectively, thereby calibrating K1.

On the other hand, in order to further avoid the problem of optical path instability caused by the fluctuations in the input optical power to the pump and the VOA, the present embodiment also relates to VOA adjustment step size control, and the flowchart is as follows:

According to the obtained VOA target attenuation amount, an attenuation deviation value between the VOA real-time attenuation amount and the VOA target attenuation amount is compared, and the VOA adjustment step size is dynamically adjusted. It should be noted that when the gap between the real-time attenuation value and the target attenuation value is large, it is necessary to use a larger step value to achieve fast convergence; when the difference between the real-time attenuation value and the target attenuation value is small, it is necessary to use a smaller step value to avoid steady-state oscillation. The specific steps are as follows:

Step 501, when the attenuation deviation value is larger than a high step threshold, using a first preset step size to approximate the target attenuation value, otherwise, executing step 502.

Step 502, when the attenuation deviation value is larger than an intermediate step threshold, using a second preset step size to approximate the target attenuation value, otherwise, executing step 503.

Step 503, when the attenuation deviation value is larger than a low step threshold, using a third preset step size to approximate the target attenuation value, otherwise, executing step 504.

Step 504, using the minimum step size minimum step value to approximate the target attenuation.

When a VOA adjustment period arrives, the VOA drive current is adjusted by using the VOA adjustment step size, and whether an error value of the VOA attenuation amount is less than a locking threshold is judged. If the condition is satisfied, the VOA enters a latched state; otherwise, the attenuation deviation value is updated to further approximate the target attenuation. When the VOA enters the latched state, a drive DAC of the VOA will be latched and will not be affected by the PD detection disturbance until it exits the latched state when the attenuation deviation is larger than an unlocking threshold. The first preset step size, the second preset step size and the third preset step size are all set by a person skilled in the art according to actual situations, wherein the first preset step size is larger than the second preset step size, and the second preset step size is larger than the third preset step size.

It should be noted that after the real-time attenuation value reaches the target attenuation value, in order to avoid misadjustment caused by noise interference, the latch threshold and unlocking logic are introduced. Only when the deviation value between the real-time attenuation amount and the target attenuation amount is larger than the unlocking threshold, the step value is used for adjustment; otherwise, the numerical control conversion value of the current VOA is latched to ensure the stability.

In summary, the present method offers the following advantages over the prior art:

1. In this embodiment, by dynamically compensating the ASE power value in the output optical power, the output signal power of the EDFA module is not affected by the fluctuation of the input signal power, and is always within the optimal acceptable power range of the optical transceiver module, thereby improving the flexibility of the optical network and simplifying the configuration scheme of the optical network.

2. The present embodiment dynamically adjusts the VOA attenuation amount by calculating the gain value in real time, and can ensure that the gain slope of the EDFA module is always in a flat state under the condition of ensuring that the output signal power is locked, thereby improving the signal quality of the multi-wavelength in the multi-wave optical communication system.

3. By setting the precision threshold of the gain value of the EDFA module and the variable step size and latch control of the VOA, the present invention avoids the instability of the optical path of the pump and the VOA due to the fluctuations in the input optical power, and improves the stability of the system.

## Embodiment 2

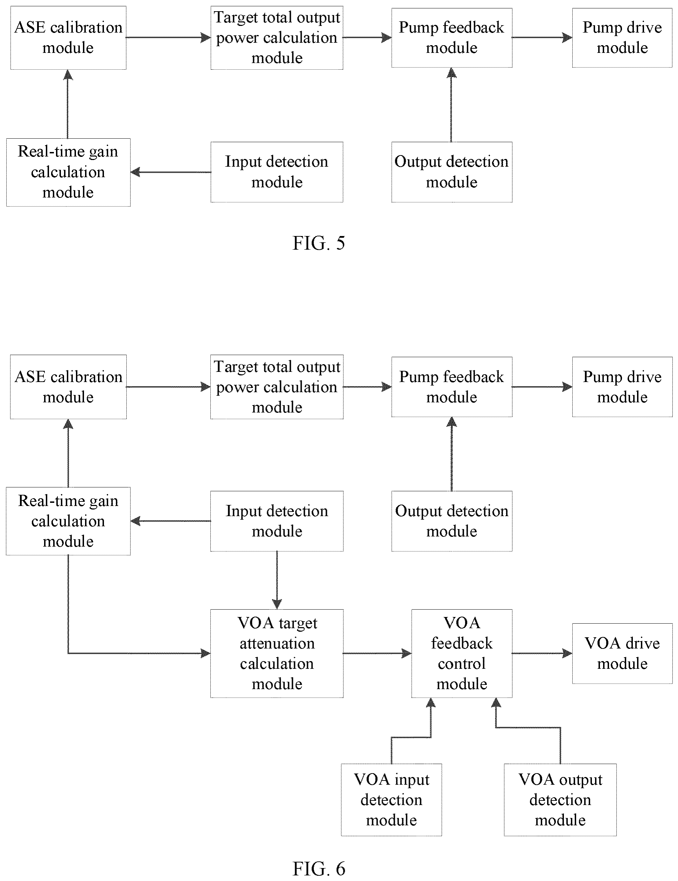

On the basis of Embodiment 1, Embodiment 2 of the present application provides an apparatus for automatic signal power control in an EDFA with real-time ASE compensation, which is used to implement the method for automatic signal power control in an EDFA with real-time ASE compensation of Embodiment 1, wherein the apparatus, as shown in FIG. 5, comprises: an input detection module, an output detection module, a real-time gain calculation module, an ASE calibration module, a desired total output power calculation module, a pump feedback module, and a pump drive module, wherein said input detection module, real-time gain calculation module, ASE calibration module, desired total output power calculation module, pump feedback module, and pump drive module are connected in sequence; said output detection module is connected to said pump feedback module;

wherein said input detection module is configured to acquire sampling data of current input optical power and provide said sampling data of the input optical power to said real-time gain calculation module; said real-time gain calculation module is configured to obtain a real-time gain based on said target output signal power and real-time input optical power; said ASE calibration module is configured to obtain real-time ASE power based on said real-time gain; said desired total output power calculation module is configured to obtain desired total output power based on said target output signal power and real-time ASE power; said output detection module is configured to acquire sampling data of the real-time total output power and provide said sampling data of the real-time total output power to said pump feedback module; said pump feedback module is configured to compare said real-time total output power with said desired total output power to determine an output deviation; and said pump drive module is configured to compensate said real-time total output power based on said output deviation, to ensure that the real-time total output power resizes in a preset acceptable power range.

As shown in FIG. 6, the apparatus further comprises: a VOA target attenuation calculation module, a VOA feedback control module, a VOA drive module, a VOA input detection module, and a VOA output detection module, wherein said VOA target attenuation calculation module is connected to said real-time gain calculation module; said VOA target attenuation calculation module, VOA feedback control module, and VOA drive module are connected in sequence; said VOA input detection module is connected to said VOA feedback control module; and said VOA output detection module is connected to said VOA feedback control module;

wherein said VOA target attenuation calculation module is configured to obtain a VOA base attenuation value and a VOA compensation attenuation value, and sum them to obtain a VOA target attenuation amount; said VOA input detection module is configured to acquire pre-VOA input optical power sampling data and provide said pre-VOA input optical power sampling data to said VOA feedback control module; said VOA output detection module is configured to acquire post-VOA output optical power sampling data and provide said post-VOA output optical power sampling data to said VOA feedback control module; said VOA feedback control module is configured to obtain a real-time attenuation value based on said pre-VOA input optical power and post-VOA output optical power, and implement closed-loop control to lock said real-time attenuation value to said VOA target attenuation amount; and said VOA drive module is configured to drive corresponding VOA components based on signals from said VOA feedback control module.

The foregoing are merely preferred embodiments of the present invention, and are not intended to limit the present invention, and any modifications, equivalents and improvements made within the spirit and principles of the present invention should be included within the scope of protection of the present invention.

**Claims**

1. A method for automatic signal power control of an EDFA with real-time ASE compensation, **characterized in** comprising:

setting target output signal power;
upon occurrence of input optical power fluctuation, obtaining a real-time gain based on the target output signal power and real-time input optical power;
obtaining real-time ASE power based on said real-time gain, and obtaining current desired total output power based on said target output signal power and said real-time ASE power;
acquiring real-time total output power, comparing said real-time total output power with said desired total output power to determine an output deviation, and compensating said real-time total output power based on said output deviation to ensure said real-time total output power resides within a preset acceptable power range.

2. The method according to claim 1, wherein said upon occurrence of input optical power fluctuation, obtaining a real-time gain based on the target output signal power and real-time input optical power, specifically comprises:

assigning a difference between gains of two input optical signals within a preset time interval as a gain deviation;
determining the occurrence of input optical power fluctuation when said gain deviation exceeds a preset precision threshold;
acquiring a difference between said target output signal power and said real-time input optical power, and constraining said difference between a maximum gain value and a minimum gain value corresponding to the optical fiber amplifier; assigning said difference as the real-time gain when said difference is less than or equal to the maximum gain value and simultaneously larger than or equal to the minimum gain value; assigning the maximum gain value as the real-time gain when said difference is larger than the maximum gain value; and assigning the minimum gain value as the real-time gain when said difference is less than the minimum gain value.

3. The method according to claim 1, wherein said assigning said difference as the real-time gain when said difference is less than or equal to the maximum gain value and simultaneously larger than or equal to the minimum gain value; assigning the maximum gain value as the real-time gain when said difference is larger than the maximum gain value; and assigning the minimum gain value as the real-time gain when said difference is less than the minimum gain value, specifically comprises:
corresponding equations are as follows:

$$\text{if } (\triangledown \text{Aspc\_gain} > \text{adjust\_thr});$$

$$\text{ASPC\_Gain} = (\text{ASPC\_Set\_pwr} - \text{Input\_pwr}) \in [\text{Gain\_min}, \text{Gain\_max}];$$

where ASPC_Gain represents the real-time gain; a deviation between a currently calculated real-time gain and a previously calculated real-time gain as $\triangledown$Aspc_gain; ASPC_Set_pwr represents the target output signal power; Gain_min and Gain_max represent the minimum gain value and the maximum gain value of an EDFA module; and adjust_thr represents the preset precision threshold.

4. The method according to claim 3, wherein updating the current real-time gain which is between the minimum gain value and the maximum gain value of the module when the gain deviation is larger than the preset precision threshold due to the occurrence of input optical power fluctuation.

5. The method according to claim 3, comprising disposing an input detector at an input end of optical power, which is configured to receive and acquire sampling data of the input optical power, and updating the sampling data of the input optical power in a first-in, first-out sequence, wherein the detected sampling data of the input optical power is used for calculating the real-time gain.

6. The method according to claim 1, wherein said obtaining the real-time ASE power based on said real-time gain specifically comprises:
obtaining the real-time ASE power based on the real-time gain and corresponding ASE calibration parameters using following equations:

$$ASE\_mw= ASE\_k * dB2mw(ASPC\_Gain) + ASE\_b;$$

$$dB2mw(ASPC\_Gain)= 10^{\wedge}(ASPC\_Gain/10);$$

where ASPC_Gain represents the real-time gain; ASE_mw represents the real-time ASE power corresponding to the real-time gain; ASE_k and ASE_b represent ASE calibration parameters; and dB2mw represents a function converting ASE power in dB units to mW units.

7. The method according to claim 6, wherein said obtaining current desired total output power based on said target output signal power and said real-time ASE power specifically comprises:
converting a measuring unit of the ASE power and summing with the target output signal power to obtain the current desired total output power using following equations:

$$exp\_pwr\_mw= dB2mw(ASPC\_Set\_pwr) + ASE\_mw;$$

$$dB2mw(ASPC\_Set\_pwr)= 10^{\wedge}(ASPC\_Set\_pwr/10);$$

where exp_pwr_mw represents the desired total output power; ASPC_Set_pwr represents the target output signal power; and dB2mw represents the function converting ASE power in dB units to mW units.

8. The method according to claim 1, wherein said acquiring real-time total output power, comparing said real-time total output power with said desired total output power to determine an output deviation, and compensating said real-time total output power based on said output deviation to ensure said real-time total output power resides within a preset acceptable power range, specifically comprises:
acquiring the real-time total output power, converting a measuring unit of the real-time total output power, obtaining a difference between the converted real-time total output power and the desired total output power to yield the output deviation, and adjusting pump drive current based on said output deviation to change the current real-time total output power, so as to ensure that the current real-time total output power resizes in the preset acceptable power range, by using following equations:

$$pid\_delta= exp\_pwr\_mw - dB2mw(Output\_pwr);$$

$$dB2mw(Output\_pwr)= 10^{\wedge}(Output\_pwr/10);$$

where pid_delta represents the output deviation; output_pwr represents the real-time total output power; and dB2mw represents a function converting ASE power in dB units to mW units.

9. The method according to claim 1, further comprising: locking the original real-time total output power to the desired total output power in PID closed-loop control based on the deviation between the set desired total output power and the real-time total output power.

10. The method according to claim 9, wherein said locking the original real-time total output power to the desired total output power in PID closed-loop control based on the deviation between the set desired total output power and the real-time total output power, specifically comprises:

increasing or decreasing the input optical power by driving a pump laser, locking final real-time total output power to the desired total output power, so as to adjust a signal gain of an erbium-doped fiber, wherein a pump drive current is adjusted according to the output deviation to improve a degree of stability under a condition of the desired total output power.

11. The method according to claim 8, wherein said a pump drive current is adjusted according to the output deviation comprises:

obtaining a variation range of the desired total output power;

adjusting PID base parameters pid_p, pid_i and pid_d to enable a steady-state performance and dynamic performance of a current state to be optimal when the desired total output power is a maximum value;

adjusting a power scaling factor ratio_p in the PID to enable the steady-state performance and dynamic performance of the current state to be optimal when the desired total output power is a minimum; and

traversing the variation range of the desired total output power to confirm that the current PID parameters meet a requirement of the steady-state performance and dynamic performance.

12. The method according to claim 1, further comprising:

acquiring a VOA base attenuation value and a VOA compensation attenuation value, and obtaining a VOA target attenuation amount by summing the VOA base attenuation value and the VOA compensation attenuation value;

acquiring pre-VOA input optical power and post-VOA output optical power;

obtaining a real-time attenuation value based on the pre-VOA input optical power and post-VOA output optical power; and adjusting a VOA digital-to-analog signal to ensure that said real-time attenuation value is locked to said VOA target attenuation amount.

13. The method according to claim 1, further comprises adjusting, after acquiring a target attenuation amount of a VOA, a real-time attenuation amount to the target attenuation amount by adjusting a digital-to-analog conversion amount of the VOA.

14. The method according to claim 1, wherein said adjusting, after acquiring a target attenuation amount of a VOA, a real-time attenuation amount to the target attenuation amount by adjusting a digital-to-analog conversion amount of the VOA, specifically comprises:

when the real-time attenuation amount is smaller than the target attenuation amount, increasing a DAC amount to increase the attenuation amount if the VOA is a bright type, and decreasing the DAC amount to decrease the attenuation amount if the VOA is a dark type; and when the real-time attenuation amount is larger than the target attenuation amount, decreasing the DAC amount to increase the attenuation amount if the VOA is the bright type, and increasing the DAC amount to decrease the attenuation amount if the VOA is the dark type.

15. The method according to claim 12, wherein said acquiring a VOA base attenuation value and a VOA compensation attenuation value, and obtaining a VOA target attenuation amount by summing the VOA base attenuation value and the VOA compensation attenuation value, specifically comprises:

obtaining the VOA reference attenuation value based on the real-time gain and a maximum gain corresponding to a gain flattening filter, using following equation:

$$\text{voa\_base} = \text{Gain\_max} - \text{ASPC\_Gain},$$

where voa_base represents the VOA base attenuation value; Gain_max represent the maximum gain of the gain flattening filter; and ASPC_Gain represents the real-time gain; obtaining the VOA compensation attenuation value based on a temperature condition of a module case, a gain condition of a current module and optical power of the current module, using following equation:

$$\text{voa\_comp} = K_1 *(\text{casetemp-casetemp\_thr}) + K_2 *(\text{gain}_{max} - \text{gain}_{set}) +$$

$$K_3 *\text{GTset} + K_4 *(\text{outputPwr}_{max} - \text{inputPwr}) + B;$$

where voa_comp represents the VOA compensation attenuation value; casetemp represents temperature of the module case; casetemp_thr represents a temperature threshold of the module case; gainmax represents a maximum set gain; gainset represents a set gain value; GTset represents a set gain tilt value; outputPwrmax represents maximum output optical power of the module; inputPwr represents the input optical power; and $K_1$-$K_4$, B each represent VOA attenuation compensation parameters;

obtaining the VOA target attenuation amount by summing the VOA reference attenuation value and the VOA compensation attenuation value using following equation:

$$exp\_voa\_att = voa\_base + voa\_comp,$$

where exp_voa_att represents the VOA target attenuation amount.

16. The method according to claim 15, wherein a calibration method of the VOA attenuation compensation parameters comprises:

observing, by a spectrum analyzer within a set range of a gain slope, a reduction amount of the VOA attenuation value per 1dB a gain slope increases, thereby calibrating K3;

recording the VOA compensation amount required to achieve a target gain slope by traversing different gain setting values and their corresponding input optical power in a setting range, thereby calibrating of K2, K4 and B;

traversing, in step 403, high and low temperature conditions in an acceptable temperature range of the module case, respectively, and compensating a deviation of the gain slope under the high and low temperature conditions, respectively, thereby calibrating K1.

17. The method according to claim 16, further comprises: comparing an attenuation deviation value between the VOA real-time attenuation amount and the VOA target attenuation amount based on the VOA target attenuation amount, and dynamically adjusting a VOA adjustment step size.

18. The method according to claim 17, wherein said dynamically adjusting a VOA adjustment step size, specifically comprises:

utilizing a first preset step size to approximate the target attenuation value when the attenuation deviation value is larger than a high step threshold value;

utilizing a second preset step size to approximate the target attenuation value when the attenuation deviation value is larger than a middle step threshold value;

utilizing a third preset step size to approximate the target attenuation value when the attenuation deviation value is larger than a low step threshold value, otherwise, utilizing a minimum step size to approximate the target attenuation value.

19. An apparatus for automatic signal power control in an EDFA with real-time ASE compensation, which is used to implement the method of any one of claims 1-18, wherein the apparatus comprises: an input detection module, an output detection module, a real-time gain calculation module, an ASE calibration module, a desired total output power calculation module, a pump feedback module, and a pump drive module, wherein:

said input detection module, real-time gain calculation module, ASE calibration module, desired total output power calculation module, pump feedback module, and pump drive module are connected in sequence; said output detection module is connected to said pump feedback module; wherein:

said input detection module is configured to acquire sampling data of current input optical power and provide said sampling data of the input optical power to said real-time gain calculation module; said real-time gain calculation module is configured to obtain a real-time gain based on said target output signal power and real-time input optical power; said ASE calibration module is configured to obtain real-time ASE power based on said real-time gain; said desired total output power calculation module is configured to obtain desired total output power based on said target output signal power and real-time ASE power; said output detection module is configured to acquire sampling data of the real-time total output power and provide said sampling data of the real-time total output power to said pump feedback module; said pump feedback module is configured to compare said real-time total output power with said desired total output power to determine an output deviation; and said pump drive module is configured to compensate said real-time total output power based on said output deviation, to ensure that the real-time total output power resizes in a preset acceptable power range.

20. The apparatus according to claim 19, **characterized in** further comprising: a VOA target attenuation calculation module, a VOA feedback control module, a VOA drive module, a VOA input detection module, and a VOA output detection module, wherein:

said VOA target attenuation calculation module is connected to said real-time gain calculation module; said VOA target attenuation calculation module, VOA feedback control module, and VOA drive module are connected in sequence; said VOA input detection module is connected to said VOA feedback control module; and said VOA output detection module is connected to said VOA feedback control module; wherein:

said VOA target attenuation calculation module is configured to obtain a VOA base attenuation value and a VOA compensation attenuation value, and sum them to obtain a VOA target attenuation amount; said VOA input detection module is configured to acquire pre-VOA input optical power sampling data and provide said pre-VOA input optical power sampling data to said VOA feedback control module; said VOA output detection module is configured to acquire post-VOA output optical power sampling data and provide said post-VOA output optical power sampling data to said VOA feedback control module; said VOA feedback control module is configured to obtain a real-time attenuation value based on said pre-VOA input optical power and post-VOA output optical power, and implement closed-loop control to lock said real-time attenuation value to said VOA target attenuation amount; and said VOA drive module is configured to drive corresponding VOA components based on signals from said VOA feedback control module.

Set target output signal power                                                                          101

When the input optical power fluctuates, obtain a real-time gain based on the target output signal power and real-time input optical power                                              102

Obtain real-time ASE power based on the real-time gain, and obtain current desired total output power based on the target output signal power and the real-time ASE power.                      103

Acquire real-time total output power, compare it with the desired total output power to obtain an output deviation, and compensate the real-time total output power based on the output deviation to ensure the real-time total output power resides within a predetermined acceptable power range.                                                                          104

FIG. 1

Assign a gain deviation as a difference between gains of two input optical signals within a preset time interval                                                                          201

Determine that the input optical power fluctuates when the gain deviation exceeds a preset precision threshold                                                                          202

Obtain a difference between the target output signal power and the real-time input optical power, and constrain the difference between a maximum gain value and a minimum gain value corresponding to a optical fiber amplifier to obtain the real-time gain                      203

FIG. 2

301

Acquire a VOA base attenuation value and a VOA compensation attenuation value

302

Obtain a VOA target attenuation amount by summing the VOA base attenuation value and the VOA compensation attenuation value

303

Acquire pre-VOA input optical power and post-VOA output optical power; obtaining a real-time attenuation value based on the pre-VOA input optical power and post-VOA output optical power; and adjusting a VOA digital-to-analog signal to ensure that said real-time attenuation value is said VOA target attenuation amount

FIG. 3

401

Observe, by a spectrum analyzer within a set range of a gain slope, a reduction amount of the VOA attenuation value per 1dB a gain slope increases, thereby calibrating K3

402

Record the VOA compensation amount required to achieve a target gain slope by traversing different gain setting values and their corresponding input optical power in a setting range, thereby calibrating of K2, K4 and B

403

Traverse high and low temperature conditions in an acceptable temperature range of the module case, respectively, and compensating a deviation of the gain slope under the high and low temperature conditions, respectively, thereby calibrating K1

FIG. 4

ASE calibration module → Target total output power calculation module → Pump feedback module → Pump drive module

Real-time gain calculation module ← Input detection module

Output detection module

**FIG. 5**

ASE calibration module → Target total output power calculation module → Pump feedback module → Pump drive module

Real-time gain calculation module ← Input detection module

Output detection module

VOA target attenuation calculation module → VOA feedback control module → VOA drive module

VOA input detection module

VOA output detection module

**FIG. 6**

## INTERNATIONAL SEARCH REPORT

| International application No. |
|---|
| **PCT/CN2024/080457** |

| A. | CLASSIFICATION OF SUBJECT MATTER |
|---|---|

H04B 10/293(2013.01)i

According to International Patent Classification (IPC) or to both national classification and IPC

| B. | FIELDS SEARCHED |
|---|---|

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, DWPI, VCN, CNKI, IEEE: 光纤放大器, edfa, erbium doped fiber application, ase, 放大自发辐射, amplified spontaneous emission, 实时, 增益, 抖动, 补偿, 输出, 功率, 目标, real time, gain, jitter, output, power, target

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 102843192 A (ACCELINK TECHNOLOGIES CO., LTD.) 26 December 2012 (2012-12-26)<br>description, paragraphs 33-34 | 1-20 |
| A | CN 108988949 A (ACCELINK TECHNOLOGIES CO., LTD.) 11 December 2018 (2018-12-11)<br>entire document | 1-20 |
| A | CN 111934180 A (ACCELINK ELECTRONICS TECHNOLOGY CO., LTD.) 13 November 2020 (2020-11-13)<br>entire document | 1-20 |
| A | CN 1570748 A (HUAWEI TECHNOLOGIES CO., LTD.) 26 January 2005 (2005-01-26)<br>entire document | 1-20 |
| A | US 2013004181 A1 (JUAREZ Juan C. et al.) 03 January 2013 (2013-01-03)<br>entire document | 1-20 |
| A | US 2022131336 A1 (ACCELINK TECHNOLOGIES CO., LTD.) 28 April 2022 (2022-04-28)<br>entire document | 1-20 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 October 2024** | **16 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/080457**

| Patent document cited in search report | | | Publication date (day/month/year) | Patent family member(s) | | | Publication date (day/month/year) |
|---|---|---|---|---|---|---|---|
| CN | 102843192 | A | 26 December 2012 | WO | 2014036764 | A1 | 13 March 2014 |
| | | | | US | 2015214913 | A1 | 30 July 2015 |
| | | | | US | 9722559 | B2 | 01 August 2017 |
| CN | 108988949 | A | 11 December 2018 | None | | | |
| CN | 111934180 | A | 13 November 2020 | None | | | |
| CN | 1570748 | A | 26 January 2005 | None | | | |
| US | 2013004181 | A1 | 03 January 2013 | US | 8774635 | B2 | 08 July 2014 |
| US | 2022131336 | A1 | 28 April 2022 | WO | 2020173182 | A1 | 03 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410097478